# EUROPEAN PATENT SPECIFICATION

(11) **EP 4 415 152 B1**
(45) Date of publication and mention of the grant of the patent: **04.02.2026**
(21) Application number: 23861708.8
(22) Date of filing: 28.08.2023
(51) Int. Cl.: H01M 50/59, H01M 50/588, H01M 50/502, H01M 50/211, H01M 50/249, A62C 2/06, A62D 1/00, H01M 50/105, H01M 50/536

(54) **BATTERY MODULE, AND BATTERY PACK AND VEHICLE INCLUDING SAME**
BATTERIEMODUL UND BATTERIEPACK SOWIE FAHRZEUG DAMIT
MODULE DE BATTERIE, ET BLOC-BATTERIE ET VÉHICULE LE COMPRENANT

(30) Priority: 19.12.2022 KR 20220178570; 06.04.2023 KR 20230045611
(43) Date of publication of application: 14.08.2024
(73) Proprietor: LG ENERGY SOLUTION, LTD., Seoul 07335 (KR)
(72) Inventor: CHOI, Wan-Sup, Daejeon 34122 (KR); KIM, Soo-Youl, Daejeon 34122 (KR); PARK, Ju-Hun, Daejeon 34122 (KR); HAN, Min-Hee, Daejeon 34122 (KR); JUNG, Hye-Mi, Daejeon 34122 (KR)
(74) Representative: Plasseraud IP
(86) International application number: PCT/KR2023/012715
(87) International publication number: WO 2024/135994

(56) References cited:
- EP-A1- 3 331 059
- EP-A1- 3 637 502
- EP-A1- 3 806 194
- EP-A1- 4 024 496
- KR-A- 20140 093 424
- KR-A- 20180 119 372
- KR-A- 20190 029 037
- KR-A- 20190 040 759
- KR-A- 20210 048 811

## Description

### TECHNICAL FIELD

The present disclosure relates to a battery module, and a battery pack and a vehicle including the same, and more specifically, it relates to a battery module including a battery cell capable of being charged and discharged, and a battery pack and a vehicle including the battery module.

### BACKGROUND ART

In general, secondary batteries refer to batteries capable of being repeatedly charged and discharged, such as lithium-ion batteries, lithium polymer batteries, nickel-cadmium batteries, nickel-hydrogen batteries, nickel-zinc batteries, and the like. A battery cell, which is the most fundamental secondary battery, may provide an output voltage of approximately 2.5V to 4.2V.

Recently, the secondary batteries have been applied to devices that require high output voltage and a large amount of charging capacity, such as electric vehicles or ESSs (Energy Storage Systems), and accordingly, a battery pack, which is manufactured in a manner of configuring a battery module by connecting a plurality of battery cells in series, parallel, or a combination thereof and reconnecting these battery modules in series, parallel, or a combination thereof, has been widely used.

As described above, since the battery cells included in the battery module or battery pack are densely disposed in a narrow space to increase energy density, it is necessary to precisely control the direction of discharging high-temperature gas or flame generated from the respective battery cells.

However, as disclosed in Korean Patent Publication No. 10-2270266, in the existing technology, when manufacturing a battery module, the electrode leads 111 and 112 of a battery cell 100 located at the rear of a bus bar frame 230 pass through a slot H4 in a through-hole structure, provided on the bus bar frame 230, toward the front surface of the bus bar frame 230, and then the ends of the electrode leads 111 and 112 are coupled to bus bars 210 and 220 attached to the front surface of the bus bar frame 230.

As a result, if thermal runaway occurs in the battery cell included in the battery module in the existing technology, high-temperature gases, flames, particles, etc. discharged from the battery cell are discharged to the front of the bus bar frame 230 through the slot H4 of the bus bar frame 230, thereby damaging the bus bar or terminal disposed in the bus bar frame and causing fire or explosion of the battery module or serial thermal runaway of other battery cells or other battery modules adjacent thereto.

Documents EP 3637502 A1, EP 4024496 A1, EP 3331059 A1 and EP 3806194 A1 discose battery packs comprising guide structures for the electrode leads of the battery cells.

### DISCLOSURE

### Technical Problem

The present disclosure has been designed to solve the problems of the related art, and therefore the present disclosure is directed to providing a battery module that facilitates the assembly of the battery module and prevents damage to a bus bar or terminal disposed in a bus bar frame when thermal runaway occurs in a battery cell included in the battery module, and a battery pack and a vehicle including the battery module.

In addition, the present disclosure also provides a battery module that prevents, when thermal runaway occurs in a battery cell included in the battery module, fire or explosion of the battery module or serial thermal runaway of other battery cells or other battery modules adjacent thereto, and a battery pack and a vehicle including the battery module.

### Technical Solution

To this end, the invention relates to a battery module according to claim 1.

The battery module after the invention may present one or more features of dependent claims 2 to 11, in any combination allowed by the claims.

The invention also relates to a battery pack after claim 12 and to a vehicle after claim 13.

### Advantageous Effects

According to the present disclosure, since a guide portion of a bus bar frame is configured to guide an electrode lead of a battery cell to the entrance of a slot of the bus bar frame and expand after the electrode lead is inserted into the slot so as to come into close contact with the electrode lead or a sealed edge portion of the battery cell that supports the electrode lead, it is possible to block gas discharge through the slot of the bus bar frame when thermal runaway occurs in the battery cell, as well as facilitating the manufacture of the battery module, thereby preventing damage to a bus bar or terminal disposed in the bus bar frame and preventing serial thermal runaway of other battery cells or other battery modules adjacent thereto.

In addition, a guide structure of the guide portion is made of an elastic material and has a filling space therein, and the filling space is filled with a filling material in a gel or liquid state, thereby extinguishing or suppressing a fire that occurs in the battery module and preventing explosion of the battery module.

In addition, since a support portion of an insulating cover on which the terminal of the battery module is seated is located in the through-hole of an end plate through which the terminal is exposed to the outside, and is configured to block contact between the terminal and the edge of the through-hole, it is possible to prevent electrical short between the terminal and the end plate due to melting or collapse of an insulation structure when high-temperature gas or flame is generated in the battery module or in other battery modules adjacent to the battery module.

In addition, since the insulating cover is made of a material with high fire resistance, it is possible to prevent or delay damage or collapse of the insulating cover due to high temperature gas or flame, thereby further improving the electrical safety of the battery module.

Furthermore, those skilled in the art to which the present disclosure pertains will be able to clearly understand from the following description that various embodiments according to the present disclosure are able to solve various technical problems not mentioned above.

### DESCRIPTION OF DRAWINGS

FIG. 1 is a perspective view illustrating a battery module according to an aspect of the present disclosure.
FIG. 2 is a partially exploded view of the battery module shown in FIG. 1.
FIG. 3 is a diagram illustrating a battery cell assembly of a battery module according to an embodiment of the present disclosure.
FIG. 4 is a diagram illustrating an example of a battery cell applicable to the present disclosure.
FIG. 5 is a front view illustrating the battery cell assembly shown in FIG. 3.
FIG. 6 is a rear perspective view illustrating a bus bar frame according to an embodiment of the present disclosure.
FIG. 7 is a cross-sectional view taken along line S1-S1' in FIG. 6.
FIG. 8 is a diagram illustrating an expanded state of the guide portion shown in FIG. 7.
FIG. 9 is a cross-sectional view illustrating a bus bar frame according to a modified embodiment.
FIG. 10 is a diagram illustrating a battery pack according to an embodiment of the present disclosure.
FIG. 11 is a diagram illustrating a vehicle according to an embodiment of the present disclosure.

### BEST MODE

Hereinafter, embodiments according to the present disclosure will be described in detail with reference to the accompanying drawings to clarify solutions corresponding to the technical problems of the present disclosure. However, in describing the present disclosure, a description of related known technology, which may obscure the subject matter of the present disclosure, may be omitted. In addition, the terms used in this specification are defined in consideration of the functions in the present disclosure and may vary depending on the intention of the designer, manufacturer, etc. or custom thereof. Therefore, definitions of the terms described below should be made based on the description throughout this specification.

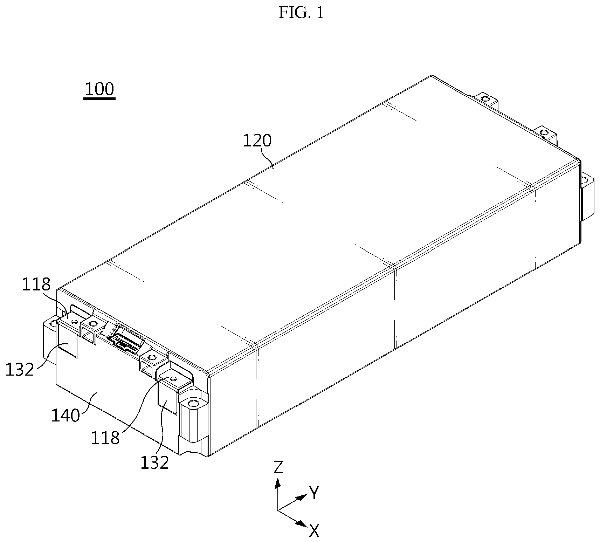

FIG. 1 is a perspective view illustrating a battery module 100 according to an embodiment of the present disclosure.

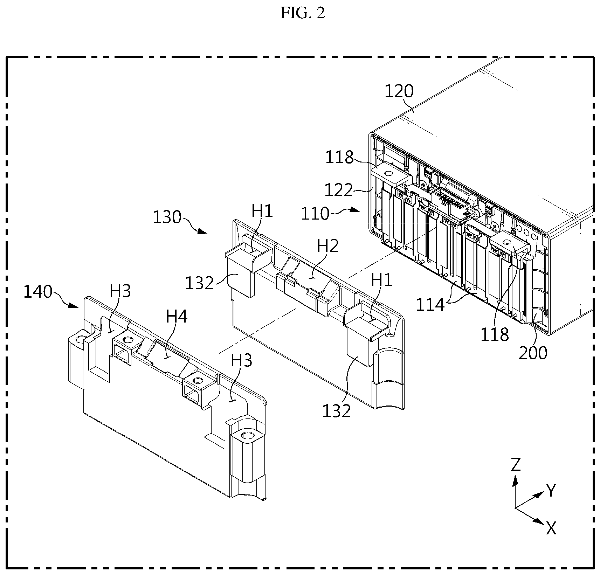

FIG. 2 is a partially exploded view of the battery module 100 shown in FIG. 1.

As shown in FIGS. 1 and 2, a battery module 100 according to an embodiment of the present disclosure includes a module frame 120 that accommodates a battery cell assembly 110, an insulating cover 130 having a support portion 132 supporting a terminal 118 of the battery module 100, and an end plate 140 covering an opening 122 of the module frame 120 to which the insulating cover 130 is coupled.

The module frame 120 may have an opening 122 at at least one of both ends in the longitudinal direction (Y-axis direction) of the battery module 100 and accommodate a battery cell assembly 110 including a plurality of battery cells in an inner space leading to the opening 122.

For example, the module frame 120 may be configured in a tube structure having openings at both ends in the longitudinal direction (Y-axis direction) thereof. Additionally, the module frame 120 may be made of a metal material with a high level of rigidity and heat resistance. This module frame 120 may be manufactured integrally through a sheet metal and welding process or an injection process.

In an embodiment, the module frame 120 may be made of clad metal obtained by bonding heterogeneous metals. That is, the module frame 120 may be configured as a multi-layer metal plate having a first metal plate and a second metal plate bonded thereto.

In this case, the first metal plate constituting the outer surface of the module frame 120 may be made of a material with higher thermal conductivity than the second metal plate constituting the inner surface of the module frame 120, and the second metal plate may be made of a material with higher heat resistance and fire resistance than the first metal plate. For example, the first metal plate may be made of a material including aluminum (Al), and the second metal plate may be made of a material including stainless steel. For reference, the melting point of aluminum is approximately 660°C, and the melting point of stainless steel is approximately 2750°C.

The insulating cover 130 may be configured to have a support portion 132 on which the terminal 118 electrically connected to the battery cells of the battery cell assembly 110 is seated and supported and primarily cover the opening 122 of the module frame 120.

To this end, the insulating cover 130 may include a guide hole H1 that guides the terminal 118 to the support portion 132. In addition, the insulating cover 130 may include a first connector hole H2 through which a connector, which transmits electrical signals from the battery cells included in the battery cell assembly 110, is exposed to the outside.

As will be explained again below, the support portion 132 may include a seating portion having a seating surface on which the terminal 118 is seated and a blocking portion that extends from the seating portion to the edge of a through-hole H3 provided on the end plate 140 and blocks contact between the edge of the through-hole H3 and the terminal 118.

This insulating cover 130 may be made of polymer synthetic resin with electrical insulating properties. In particular, the insulating cover 130 may be made of a material with high fire resistance as well as electrical insulating properties.

The end plate 140 may be configured to have a through-hole H3 through which the support portion 132 of the insulating cover 130 is exposed to the outside and secondarily cover the opening 122 of the module frame 120 covered by the insulating cover 130. In addition, the end plate 140 may include a second connector hole H4 provided at a position corresponding to the first connector hole H2 of the insulating cover 130 so as to expose the connector to the outside.

This end plate 140 may be made of a metal material with a high level of rigidity and heat resistance.

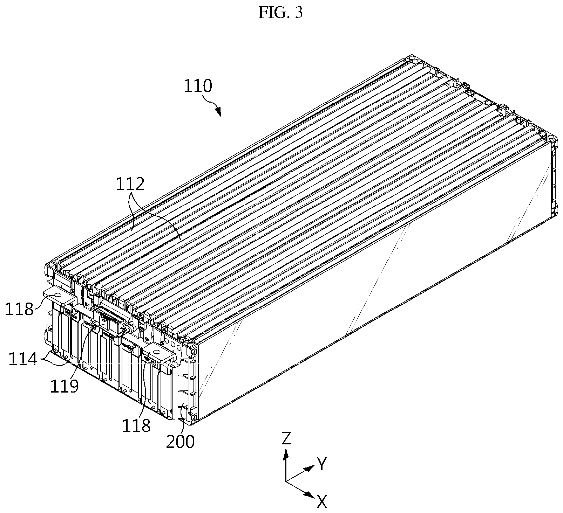

FIG. 3 is a diagram illustrating a battery cell assembly 110 of a battery module according to an embodiment of the present disclosure.

As shown in FIG. 3, the battery cell assembly 110 may include a plurality of battery cells 112, a bus bar 114, and a bus bar frame 200.

The plurality of battery cells 112 may be arranged densely in the width direction (X-axis direction) of the battery module. Each battery cell 112 is the most fundamental secondary battery capable of being charged and discharged, and may be implemented in various types.

As will be explained again below, the battery cell 112 may be implemented as a pouch-type secondary battery. In this case, the battery cell 112 may be manufactured by storing an electrode assembly and an electrolyte material in a pouch-type case and sealing the case.

The electrode assembly of the battery cell 112 has a stacked structure in which the positive electrode and the negative electrode are stacked with a separator therebetween. In addition, the case of the battery cell 112 may be configured using one or two pouch sheets.

This battery cell 112 may have an electrode lead extending to the outside of the battery cell 112. The electrode lead may have one end electrically connected to the electrode assembly accommodated inside the case and the other end extending outside the case to be connected to the bus bar 114 coupled to the bus bar frame 200.

As shown in FIG. 3, the plurality of battery cells 112 may be stacked on each other in the horizontal direction (X-axis direction) while standing upright in the vertical direction (Z-axis direction).

In another embodiment, each of the plurality of battery cells 112 may be implemented as a cylindrical secondary battery or a prismatic secondary battery.

The bus bar 114 may be configured to be electrically connected to the electrode lead of the battery cell 112 or the terminal 118. To this end, the bus bar 114 may be made of a conductive material such as metal.

The bus bar frame 200 may be configured to support at least one bus bar 114. This bus bar frame 200 may be made of electrical insulating material. As will be explained again below, the bus bar frame 200 may be made of a material with high fire resistance as well as electrical insulating properties.

In addition, the battery cell assembly 110 may further include a terminal 118 that is electrically connected to the battery cells through the bus bar 114 and provides the output voltage of the battery module 100, a connector 119 that transmits electrical signals related to the battery cells, and the like. In this case, the terminal 118 and the connector 119 may be disposed on the bus bar frame 200.

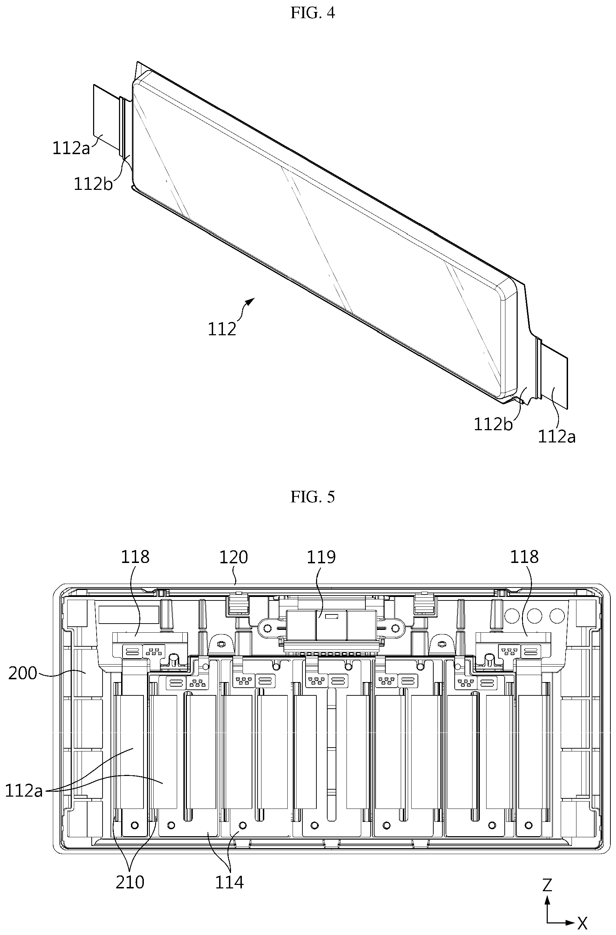

FIG. 4 is a diagram illustrating an example of a battery cell 112 applicable to the present disclosure.

As shown in FIG. 4, the battery cell 112 may be configured as a pouch-type secondary battery. In this case, the battery cell 112 may have an electrode lead 112a. The electrode lead 112a may have one end electrically connected to an electrode assembly accommodated inside the battery cell 112 and the other end extending outside the battery cell 112.

The case of the battery cell 112 may be made of a metal sheet including aluminum. In an embodiment, the case of the battery cell 112 may be manufactured using a single metal sheet. For example, the case may be manufactured by folding the metal sheet such that both ends of the metal sheet face each other and then bonding overlapping edge portions of both ends to each other so as to be sealed.

In another embodiment, the case of the battery cell 112 may be manufactured using two metal sheets. For example, the case may be manufactured by overlapping two metal sheets such that they face each other and then bonding edge portions of the two overlapping metal sheets to each other so as to be sealed.

The sealed edge portion 112b of the battery cell 112 may include a PP (polypropylene) layer, and the PP layer may be fused by heat to be sealed .

This case sealing process is difficult to perform uniformly due to various factors such as heating temperature or time, the thickness, width, and quality of the PP layer, and the like. Therefore, it is difficult to consistently control the direction of gas discharged through the sealed edge portion 112b of the battery cell 112.

Meanwhile, the electrode lead 112a may extend to the outside through the sealed edge portion 112b of the entire edge of the battery cell 112 and may be connected to the bus bar 114.

FIG. 5 is a front view illustrating the battery cell assembly 110 shown in FIG. 3.

As shown in FIG. 5, the bus bar frame 200 may be disposed in the inner space of the module frame 120 so as to be disposed between a plurality of battery cells accommodated in the module frame 120 and the insulating cover 130 covering the opening of the module frame 120, thereby supporting at least one bus bar 114. In this case, each bus bar 114 may be electrically connected to the electrode lead 112a of the battery cell 112 or the terminal 118 of the battery module 100.

The terminal 118, which is electrically connected to the battery cells through the bus bar 114, and the connector 119, which transmits electrical signals related to the battery cells, may be disposed on the bus bar frame 200.

This bus bar frame 200 may be made of a material with high fire resistance as well as electrical insulating properties. For example, the bus bar frame 200 may be made of one or more of polyimide, aromatic polyamide, polyphenylene sulfide, polyether ether ketone, fluoropolymer, and ceramic.

As described above, since the bus bar frame 200 is made of a material with insulating properties and high fire resistance, structural deformation of the bus bar frame can be suppressed even when high temperature gas or flame is generated inside the battery module, thereby preventing electrical short circuits caused by contact between the bus bars.

In addition, the bus bar frame 200 of the battery module 100 according to the present disclosure may be configured to block gas discharged to the electrode lead 112a of the battery cell 112.

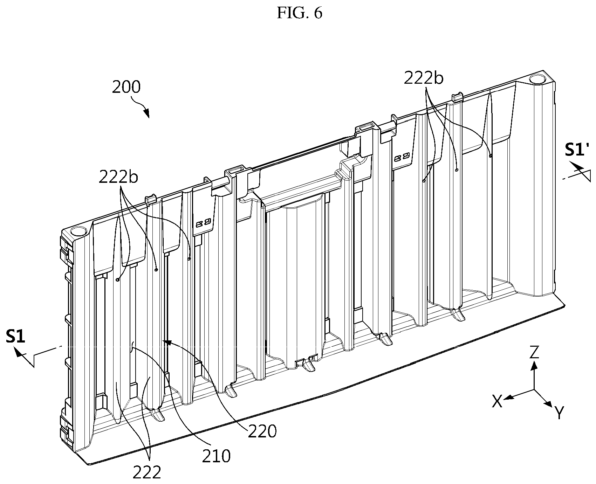

FIG. 6 is a rear perspective view illustrating a bus bar frame 200 according to an embodiment of the present disclosure.

As shown in FIG. 6, the bus bar frame 200 has a slot 210 into which the electrode lead 112a of the battery cell 112 is inserted and a guide portion 220.

The guide portion 220 is configured to guide the electrode lead 112a of the battery cell 112 to the entrance of the slot 210 when assembling the battery module. The end of the electrode lead 112a inserted into the slot 210 may be connected to the bus bar 114 coupled to the front surface of the bus bar frame 200.

In particular, the guide portion 220 may be configured to expand after the electrode lead 112a is inserted into the slot 210 and come into close contact with the electrode lead 112a or the edge portion 112b of the battery cell 112 supporting the electrode lead 112a.

To this end, the guide portion 220 includes a guide structure 222 and a filling material filled into the guide structure 222.

The guide structure 222 is made of an elastic material such as rubber or polymer synthetic resin and has a guide surface on its outer surface to guide the electrode lead 112a to the entrance of the slot 210 and a filling space provided therein.

In this case, the guide structure 222 may include an inlet 222b, leading to the filling space, through which the filling material is injected. After the injection of the filling material is completed, the inlet 222b may be sealed.

Additionally, the guide portion 220 may include a plurality of guide structures 222 described above. In this case, the plurality of guide structures may include a first guide structure and a second guide structure, which are located on the opposite sides with respect to the entrance of the slot 210. That is, the entrance of the slot 210 may be located between two guide structures.

The filling material is filled into the filling space of the guide structure 222 through the inlet 222b, thereby expanding the guide structure 222. In this case, the filling material may include a material in a gel state or liquid state.

In an embodiment, the filling material may be configured to expand while being filled into the filling space of the guide structure 222, thereby also expanding the guide structure 222. In this case, the filling material may include at least one of silicone, expandable silicone, silicone foam, polyurethane foam, and a foaming agent.

In another embodiment, the filling material may be configured to expand by heat of a predetermined temperature or above after being filled into the filling space, thereby also expanding the guide structure 222. In this case, the filling material may include thermal expansion materials that expand at a predetermined temperature. The thermal expansion materials may include a variety of thermally expandable materials known at the time of filing the present disclosure. For example, the thermal expansion materials may include one or more of PDMS (poly-di-methyl-siloxane), polyvinyl acetate, polystyrene, butyl (meth)acrylate, hexyl (meth)acrylate, n-octyl (meth)acrylate, isooctyl (meth)acrylate, 2-ethylhexyl (meth)acrylate, isononyl (meth)acrylate, and urethane-based polymer.

In addition, the filling material may include a fire-extinguishing agent. For example, the fire-extinguishing agent may be configured in a liquid state, gel state, or powder state, and may include one or more of sulfuric acid, potassium carbonate, sodium bicarbonate, aluminum sulfate, water, halon, and halogen compounds. Powder-type fire-extinguishing agents may provide cooling and fire extinguishing effects by decomposing through an endothermic reaction to produce CO₂ gas. However, the powder-type fire-extinguishing agents may leave solid residues. To prevent this, the fire-extinguishing agent may include a halon-based liquid fire-extinguishing agent.

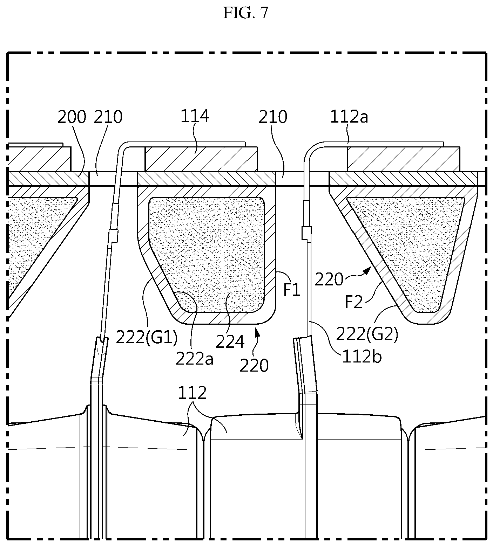

FIG. 7 is a cross-sectional view taken along line S1-S1' in FIG. 6.

As shown in FIG. 7, the guide portion 220 is configured to guide the electrode lead 112a of the battery cell 112 to the entrance of the slot 210 when the electrode lead 112a is inserted into the slot 210 of the bus bar frame 200.

To this end, the guide portion 220 may include a plurality of guide structures 222. That is, the guide portion 220 may include a first guide structure G1 and a second guide structure G2, which are located on the opposite sides with respect to the entrance of the slot 210.

In this case, the first guide structure G1 may have a first guide surface F1 that guides the electrode lead 112a on one side of the slot 210, and the second guide structure G2 may have a second guide surface F2 that guides the electrode lead 112a on the other side of the slot 210.

The end of the electrode lead 112a inserted into the slot 210 is connected to the bus bar 114 coupled to the front surface of the bus bar frame 200.

Meanwhile, a filling space 222a may be provided inside the first guide structure G1 and the second guide structure G2, respectively. This filling space 222a may be filled with the above-described filling material 224.

In addition, when the electrode lead 112a of the battery cell 112 is inserted into the slot 210 of the bus bar frame 200 and connected to the bus bar 114, the first guide structure G1 and the second guide structure G2 may be expanded by the filling material 224 contained in the filling space 222a so as to come into close contact with the electrode lead 112a inserted into the slot 210 or the edge portion 112b of the battery cell 112 supporting the electrode lead 112a.

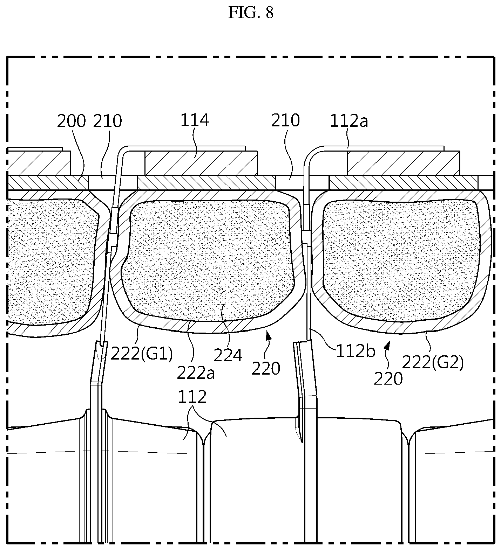

FIG. 8 is a diagram illustrating an expanded state of the guide portion 220 shown in FIG. 7.

As shown in FIG. 8, if the guide structures G1 and G2 of the guide portion 220 are expanded by the filling material 224 to come into close contact with the electrode lead 112a inserted into the slot 210 or the edge portion 112b of the battery cell 112 supporting the electrode lead 112a, the gas movement path through the slot 210 of the bus bar frame 200 may be blocked.

As a result, when thermal runaway occurs in the battery cell 112, damage to the bus bar 114 or terminal 118 disposed on the bus bar frame 200 may be prevented, and serial thermal runaway may be suppressed or delayed in other battery cells or other battery modules adjacent thereto.

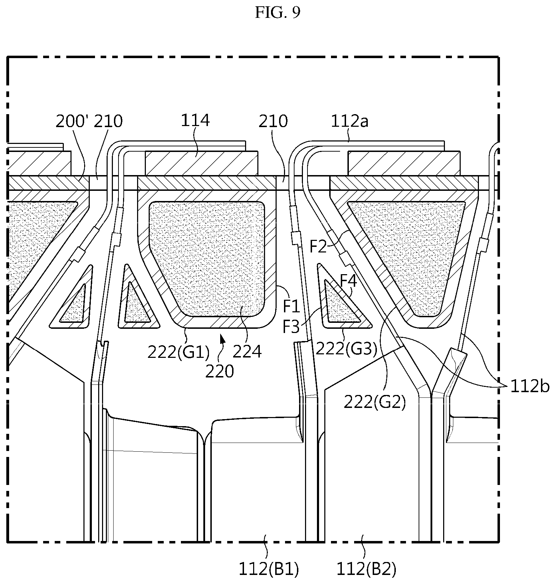

FIG. 9 is a cross-sectional view illustrating a bus bar frame 200' according to a modified embodiment.

As shown in FIG. 9, the bus bar frame 200' may be configured so that a plurality of electrode leads 112a is inserted into one slot 210.

In this case, the first guide structure G1 may have a first guide surface F1 that guides the electrode lead 112a of a first battery cell B1 among the plurality of battery cells 112 included in the battery module 100 to the entrance of the slot 210. In addition, the second guide structure G2 may have a second guide surface F2 that guides the electrode lead of a second battery cell B2 among the plurality of battery cells 112 to the entrance of the slot 210.

In an embodiment, the bus bar frame 200' may further include a third guide structure G3 located between the first guide structure G1 and the second guide structure G2.

In this case, the third guide structure G3 may have a third guide surface F3 that guides the electrode lead of the first battery cell B1 to the entrance of the slot 210 and a fourth guide surface F4 that guides the electrode lead of the second battery cell B2 to the entrance of the slot 210.

If the electrode leads of the first battery cell B1 and the second battery cell B2 are inserted into the same slot 210 and connected to the bus bar 114, the first guide structure G1, the second guide structure G2, and the third guide structure G3 may respectively expand to come into close contact with the electrode leads of the first battery cell B1 and the second battery cell B2 or the edge portions of the battery cells supporting the electrode leads.

That is, the first guide surface F1 of the first guide structure G1 and the third guide surface F3 of the third guide structure G3 may come into close contact with the electrode lead 112a of the first battery cell B1 or the edge portion of the first battery cell B1. In addition, the second guide surface F2 of the second guide structure G2 and the fourth guide surface F4 of the third guide structure G3 may come into close contact with the electrode lead of the second battery cell B2 or the edge portion 112b of the second battery cell B2.

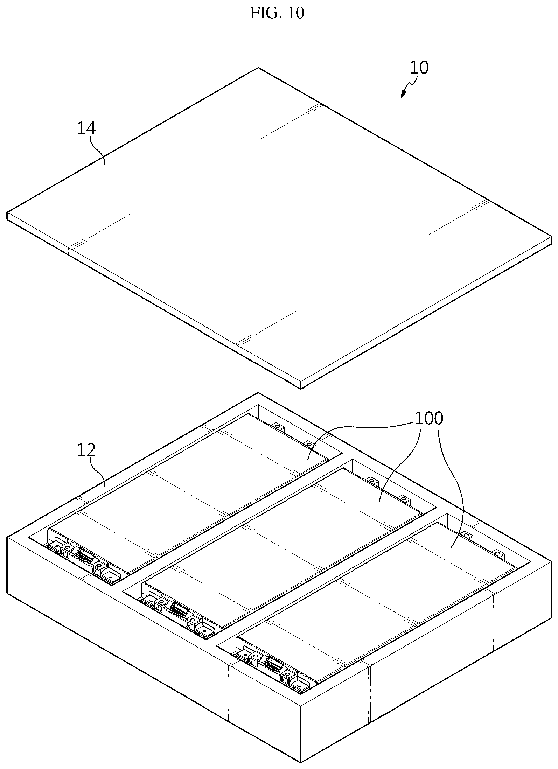

FIG. 10 is a diagram illustrating a battery pack 10 according to an embodiment of the present disclosure.

As shown in FIG. 10, a battery pack 10 according to an embodiment of the present disclosure may include the battery module 100 according to the various embodiments described above.

In addition, the battery pack 10 may further include a pack case 12 and 14 that accommodate one or more battery modules 100.

The pack case 12 and 14 may include a pack tray 12 that has an accommodation space that accommodates a plurality of battery modules and a pack lid 14 that covers the top opening of the pack tray 12.

In addition, the battery pack 10 may further include a variety of electrical equipment (not shown) that controls the charging and discharging operation of the battery module accommodated in the pack case 12 and 14 or the battery cells included in the battery module 100 and monitors SOC (state-of-charge), SOH (state-of-health), and the like. The electrical equipment may be accommodated in the pack case 12 and 14 together with the battery module 100.

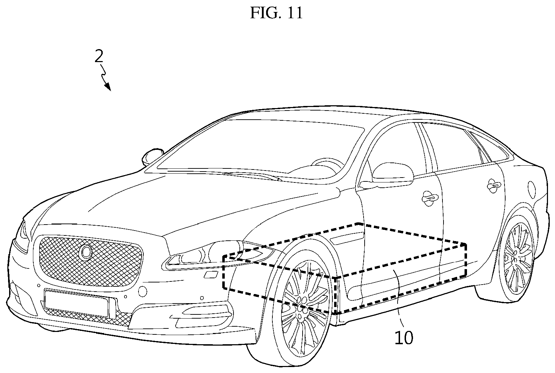

FIG. 11 is a diagram illustrating a vehicle 2 according to an embodiment of the present disclosure.

As shown in FIG. 11, a vehicle 2 according to an embodiment of the present disclosure may include the battery module 100 according to various embodiments described above. For example, the vehicle 2 may include a battery pack 10 having one or more battery modules 100 provided therein. In this case, the battery module 100 or the battery pack 10 including the same may provide electric energy required for various operations of the vehicle 2.

In this case, the vehicle 2 may further include an electric motor that drives the vehicle 2 using electric energy supplied from the battery module 100 or the battery pack 10 including the same.

For reference, the battery module 100 according to the present disclosure may be applied to various electric devices or electric systems that use electric energy in addition to vehicles, and may also be applied to ESSs (Energy Storage Systems).

As described above, according to the present disclosure, since the guide portion of the bus bar frame is configured to guide the electrode lead of the battery cell to the entrance of the slot of the bus bar frame and expand after the electrode lead is inserted into the slot so as to come into close contact with the electrode lead or a sealed edge portion of the battery cell that supports the electrode lead, it is possible to block gas discharge through the slot of the bus bar frame when thermal runaway occurs in the battery cell, as well as facilitating the manufacture of the battery module, thereby preventing damage to the bus bar or terminal disposed on the bus bar frame and preventing serial thermal runaway of other battery cells or other battery modules adjacent thereto.

In addition, the guide structure of the guide portion is made of an elastic material and has a filling space therein, and the filling space is filled with a filling material in a gel or liquid state, thereby extinguishing or suppressing a fire that occurs in the battery module and preventing explosion of the battery module.

In addition, since the support portion of the insulating cover on which the terminal of the battery module is seated is located in the through-hole of the end plate through which the terminal is exposed to the outside, and is configured to block contact between the terminal and the edge of the through-hole, it is possible to prevent electrical short between the terminal and the end plate due to melting or collapse of an insulation structure when high-temperature gas or flame is generated in the battery module or in other battery modules adjacent to the battery module.

In addition, since the insulating cover is made of a material with high fire resistance, it is possible to prevent or delay damage or collapse of the insulating cover due to high temperature gas or flame, thereby further improving the electrical safety of the battery module.

Furthermore, it goes without saying that the embodiments according to the present disclosure are able to solve various technical problems other than those mentioned in this specification in the relevant technical field as well as related technical fields.

## Claims

1. A battery module (100) comprising:
a battery cell (112) comprising an electrode lead (112a) extending a predetermined length;
a bus bar frame (200) having a slot (210) into which the electrode lead (112a) is inserted and a guide portion (220) configured to guide the electrode lead (112a) to an entrance of the slot (210); and
a bus bar (114) coupled to the bus bar frame (200) and connected to an end of the electrode lead (112a) inserted into the slot (210),
wherein the guide portion (220) is configured to expand after the electrode lead (112a) is inserted into the slot (210) and come into close contact with the electrode lead (112a) or an edge portion (112b) of the battery cell (112) supporting the electrode lead (112a),
**characterized in that** the guide portion (220) comprises:
a guide structure (222) made of an elastic material and having a guide surface on an outer surface thereof to guide the electrode lead (112a) to the entrance of the slot (210) and a filling space (222a) provided therein; and
a filling material (224) filled into the filling space (222a) and configured to expand the guide structure (222).

2. The battery module (100) according to claim 1,
wherein the guide structure (222) comprises an inlet (222b), leading to the filling space (222a), through which the filling material (224) is injected.

3. The battery module (100) according to claim 1,
wherein the guide portion (220) comprises a plurality of guide structures (222), and
wherein the plurality of guide structures (222) comprises a first guide structure (G1) and a second guide structure (G2), which are located on the opposite sides with respect to the entrance of the slot (210).

4. The battery module (100) according to claim 3,
wherein the first guide structure (G1) and the second guide structure (G2) are respectively configured to be expanded by the filling material (224) and come into close contact with the electrode lead (112a) inserted into the slot (210) or the edge portion (112b) of the battery cell (112) supporting the electrode lead (112a) inserted into the slot (210).

5. The battery module (100) according to claim 3,
wherein the battery module (100) comprises a plurality of battery cells (112),
wherein the first guide structure (G1) has a first guide surface (F1) that guides the electrode lead (112a) of a first battery cell (B1) among the plurality of battery cells (112) to the entrance of the slot (210), and
wherein the second guide structure (G2) has a second guide surface (F2) that guides the electrode lead (112a) of a second battery (B2) cell among the plurality of battery cells (112) to the entrance of the slot (210).

6. The battery module (100) according to claim 5,
wherein the plurality of guide structures (222) further comprises a third guide structure (G3) positioned between the first guide structure (G1) and the second guide structure (G2).

7. The battery module (100) according to claim 6,
wherein the third guide structure (G3) has a third guide surface (F3) that guides the electrode lead (112a) of the first battery cell (B1) to the entrance of the slot (210) and a fourth guide surface (F4) that guides the electrode lead (112a) of the second battery cell (B2) to the entrance of the slot (210).

8. The battery module (100) according to claim 1,
wherein the filling material (224) comprises a material in a gel state or a liquid state.

9. The battery module (100) according to claim 1,
wherein the filling material (224) comprises at least one of silicone, silicone foam, polyurethane foam, and a foaming agent.

10. The battery module (100) according to claim 1,
wherein the filling material (224) comprises a thermal expansion material that expands at a predetermined temperature.

11. The battery module (100) according to claim 1,
wherein the filling material (224) comprises a fire-extinguishing agent.

12. A battery pack (10) comprising the battery module (100) according to any one of claims 1 to 11.

13. A vehicle (2) comprising the battery module (100) according to any one of claims 1 to 11.

## Patentansprüche

1. Batteriemodul (100), umfassend:
eine Batteriezelle (112), welche eine Elektrodenleitung (112a) umfasst, die sich über eine vorbestimmte Länge erstreckt;
einen Sammelschienenrahmen (200), welcher einen Schlitz (210), in welchen die Elektrodenleitung (112a) eingesetzt ist, und einen Führungsabschnitt (220) aufweist, welcher dazu eingerichtet ist, die Elektrodenleitung (112a) zu einem Eingang des Schlitzes (210) zu führen; und
eine Sammelschiene (114), welche mit dem Sammelschienenrahmen (200) gekoppelt ist und mit einem Ende der Elektrodenleitung (112a) verbunden ist, welche in den Schlitz (210) eingesetzt ist,
wobei der Führungsabschnitt (220) dazu eingerichtet ist, sich auszudehnen, nachdem die Elektrodenleitung (112a) in den Schlitz (210) eingesetzt worden ist, und in engen Kontakt mit der Elektrodenleitung (112a) oder einem Randabschnitt (112b) der Batteriezelle (112) zu gelangen, welcher die Elektrodenleitung (112a) haltert,
**dadurch gekennzeichnet, dass** der Führungsabschnitt (220) umfasst:
eine Führungsstruktur (222), welche aus einem elastischen Material hergestellt ist und an einer äußeren Fläche davon eine Führungsfläche, um die Elektrodenleitung (112a) zu dem Eingang des Schlitzes (210) zu führen, und einen darin bereitgestellten Füllraum (222a) aufweist; und
ein Füllmaterial (224), welches in den Füllraum (222a) gefüllt ist und dazu eingerichtet ist, die Führungsstruktur (222) auszudehnen.

2. Batteriemodul (100) nach Anspruch 1,
wobei die Führungsstruktur (222) einen zu dem Füllraum (222a) führenden Einlass (222b) umfasst, durch welchen das Füllmaterial (224) eingespritzt wird.

3. Batteriemodul (100) nach Anspruch 1,
wobei der Führungsabschnitt (220) eine Mehrzahl von Führungsstrukturen (222) umfasst und
wobei die Mehrzahl von Führungsstrukturen (222) eine erste Führungsstruktur (G1) und eine zweite Führungsstruktur (G2) umfasst, welche in Bezug auf den Eingang des Schlitzes (210) an den entgegengesetzten Seiten angeordnet sind.

4. Batteriemodul (100) nach Anspruch 3,
wobei die erste Führungsstruktur (G1) und die zweite Führungsstruktur (G2) jeweils dazu eingerichtet sind, durch das Füllmaterial (224) ausgedehnt zu werden und in engen Kontakt mit der Elektrodenleitung (112a), welche in den Schlitz (210) eingesetzt ist, oder dem Randabschnitt (112b) der Batteriezelle (112) zu gelangen, welcher die Elektrodenleitung (112a) haltert, welche in den Schlitz (210) eingesetzt ist.

5. Batteriemodul (100) nach Anspruch 3,
wobei das Batteriemodul (100) eine Mehrzahl von Batteriezellen (112) umfasst,
wobei die erste Führungsstruktur (G1) eine erste Führungsfläche (F1) aufweist, welche die Elektrodenleitung (112a) einer ersten Batteriezelle (B1) unter der Mehrzahl von Batteriezellen (112) zu dem Eingang des Schlitzes (210) führt, und
wobei die zweite Führungsstruktur (G2) eine zweite Führungsfläche (F2) aufweist, welche die Elektrodenleitung (112a) einer zweiten Batteriezelle (B2) unter der Mehrzahl von Batteriezellen (112) zu dem Eingang des Schlitzes (210) führt.

6. Batteriemodul (100) nach Anspruch 5,
wobei die Mehrzahl von Führungsstrukturen (222) ferner eine dritte Führungsstruktur (G3) umfasst, welche zwischen der ersten Führungsstruktur (G1) und der zweiten Führungsstruktur (G2) positioniert ist.

7. Batteriemodul (100) nach Anspruch 6,
wobei die dritte Führungsstruktur (G3) eine dritte Führungsfläche (F3), welche die Elektrodenleitung (112a) der ersten Batteriezelle (B1) zu dem Eingang des Schlitzes (210) führt, und eine vierte Führungsfläche (F4) aufweist, welche die Elektrodenleitung (112a) der zweiten Batteriezelle (B2) zu dem Eingang des Schlitzes (210) führt.

8. Batteriemodul (100) nach Anspruch 1,
wobei das Füllmaterial (224) ein Material in einem Gelzustand oder einem flüssigen Zustand umfasst.

9. Batteriemodul (100) nach Anspruch 1,
wobei das Füllmaterial (224) wenigstens eines aus Silikon, Silikonschaum, Polyurethanschaum und einem Schäummittel umfasst.

10. Batteriemodul (100) nach Anspruch 1,
wobei das Füllmaterial (224) ein thermisches Ausdehnungsmaterial umfasst, welches sich bei einer vorbestimmten Temperatur ausdehnt.

11. Batteriemodul (100) nach Anspruch 1,
wobei das Füllmaterial (224) ein Feuerlöschmittel umfasst.

12. Batteriepack (10), umfassend das Batteriemodul (100) nach einem der Ansprüche 1 bis 11.

13. Fahrzeug (2), umfassend das Batteriemodul (100) nach einem der Ansprüche 1 bis 11.

## Revendications

1. Module de batterie (100) comprenant :
un élément de batterie (112) comprenant une languette d'électrode (112a) s'étendant sur une longueur prédéterminée ;
un cadre (200) de barre omnibus présentant une fente (210) dans laquelle est inséré la languette d'électrode (112a) et une partie de guidage (220) configurée pour guider la languette d'électrode (112a) vers une entrée de la fente (210) ; et
une barre omnibus (114) associée au cadre (200) de barre omnibus et reliée à une extrémité de la languette d'électrode (112a) insérée dans la fente (210),
dans lequel la partie de guidage (220) est configurée pour s'élargir une fois la languette d'électrode (112a) insérée dans la fente (210) et entrer en contact étroit avec la languette d'électrode (112a) ou une partie de bord (112b) de l'élément de batterie (112) supportant la languette d'électrode (112a),
**caractérisé en ce que** la partie de guidage (220) comprend :
une structure de guidage (222) en un matériau élastique et présentant une surface de guidage sur une surface externe de celle-ci pour guider la languette d'électrode (112a) vers l'entrée de la fente (210) et un espace de remplissage (222a) ménagé dans celle-ci ; et
un matériau de remplissage (224) remplit l'espace de remplissage (222a) et est configuré pour élargir la structure de guidage (222).

2. Module de batterie (100) selon la revendication 1,
dans lequel la structure de guidage (222) comprend une entrée (222b), conduisant à l'espace de remplissage (222a), à travers laquelle est injecté le matériau de remplissage (224).

3. Module de batterie (100) selon la revendication 1,
dans lequel la partie de guidage (220) comprend une pluralité de structures de guidage (222), et dans lequel la pluralité de structures de guidage (222) comprennent une première structure de guidage (G1) et une deuxième structure de guidage (G2), qui sont situées sur les côtés opposés par rapport à l'entrée de la fente (210).

4. Module de batterie (100) selon la revendication 3,
dans lequel la première structure de guidage (G1) et la deuxième structure de guidage (G2) sont respectivement configurées pour être élargies par le matériau de remplissage (224) et entrer en contact étroit avec la languette d'électrode (112a) insérée dans la fente (210) ou la partie de bord (112b) de l'élément de batterie (112) supportant la languette d'électrode (112a) insérée dans la fente (210).

5. Module de batterie (100) selon la revendication 3,
dans lequel le module de batterie (100) comprend une pluralité d'éléments de batterie (112),
dans lequel la première structure de guidage (G1) présente une première surface de guidage (F1) qui guide la languette d'électrode (112a) d'un premier élément de batterie (B1), parmi la pluralité d'éléments de batterie (112), vers l'entrée de la fente (210), et dans lequel la deuxième structure de guidage (G2) présente une deuxième surface de guidage (F2) qui guide la languette d'électrode (112a) d'un second élément de batterie (B2), parmi la pluralité d'éléments de batterie (112), vers l'entrée de la fente (210).

6. Module de batterie (100) selon la revendication 5,
dans lequel la pluralité de structures de guidage (222) comprennent également une troisième structure de guidage (G3) située entre la première structure de guidage (G1) et la deuxième structure de guidage (G2).

7. Module de batterie (100) selon la revendication 6,
dans lequel la troisième structure de guidage (G3) présente une troisième surface de guidage (F3) qui guide la languette d'électrode (112a) du premier élément de batterie (B1) vers l'entrée de la fente (210) et une quatrième surface de guidage (F4) qui guide la languette d'électrode (112a) du second élément de batterie (B2) vers l'entrée de la fente (210).

8. Module de batterie (100) selon la revendication 1,
dans lequel le matériau de remplissage (224) comprend un matériau à l'état de gel ou à l'état liquide.

9. Module de batterie (100) selon la revendication 1,
dans lequel le matériau de remplissage (224) comprend au moins l'un parmi de la silicone, de la mousse de silicone, de la mousse de polyuréthane et un agent moussant.

10. Module de batterie (100) selon la revendication 1,
dans lequel le matériau de remplissage (224) comprend un matériau de dilatation thermique qui se dilate à une température prédéterminée.

11. Module de batterie (100) selon la revendication 1,
dans lequel le matériau de remplissage (224) comprend un agent de lutte contre l'incendie.

12. Bloc-batterie (10) comprenant le module de batterie (100) selon l'une quelconque des revendications 1 à 11.

13. Véhicule (2) comprenant le module de batterie (100) selon l'une quelconque des revendications 1 à 11.
